# EUROPEAN PATENT APPLICATION

(11) **EP 2 210 481 A1**
(43) Date of publication of application: **28.07.2010**
(21) Application number: 09158979.6
(22) Date of filing: 28.04.2009
(51) Int. Cl.: A01G 9/10

(54) **Stackable crate**

(30) Priority: 26.01.2009 IT TV20090009
(71) Applicant: Menegazzo, Corrado, 31040 Pederobba (TV) (IT)
(72) Inventor: Menegazzo, Corrado, 31040 Pederobba (TV) (IT)
(74) Representative: Modiano, Micaela Nadia

(57) **Abstract**

A stackable crate (1), constituted by a perimetric frame (2) that has, in a lower region and at the corners, fixed legs (6) of limited height. The frame (2) further has, in a lower region and proximate to the corners, first seats (7) for the rotary and removable interconnection of feet (8a, 8b) of a chosen height. The frame (2) also has, in an upper region, second seats (21) for the stacking of the legs (6) and engagement means for the removable interconnection of at least one tray (20).

## Description

The present invention relates to a stackable crate that is used particularly for the floral and horticultural sector.

Currently, in this field it is known to use crates made of plastics that are composed of a perimetric frame provided with supporting legs at the corners and with a flat tray that has a plurality of seats for containing for example small plants.

In this field, the problem of optimizing volumes is felt and therefore it is known to stack multiple crates together.

One problem that arises is due to the fact that the use of the crate is linked for example to the height of the product contained in the tray, which is limited, in its maximum dimension, by the height of the legs.

Further, the problem is also felt of optimizing the available volumes in order to occupy, after use of the crate, and therefore for example when the plant is removed, a limited amount of space, which however is still set by the height of the legs of each crate.

One known method can also be deduced from FR 2.468.299, which describes a tool for growing plants, which comprises supports for growing cells, each composed of a frame that has supports that protrude from it in a lower region and a bracket that protrudes in an upper region, so as to allow the stacking of multiple supports at which it is possible to position the growing cells, which are thus spaced by a preset value with respect to the overlying growing cells.

However, this solution is ill-suited to be stored in case of nonuse or transport thereof without the growing cells, since it still occupies the same volume as in the case of growing in progress.

The aim of the present invention is to solve the above-mentioned drawbacks, by providing crates that can be mutually stacked, optimizing volumes both as a function of the heights of the products stored therein and in case of transport and/or storage thereof in the absence of a culture.

Within this aim, an object of the present invention is to provide a crate in which this optimization of the occupied volume can be achieved rapidly and easily even by operators who are not particularly trained.

Another object of the present invention is to provide a crate that is structurally simple and can be provided by means of ordinary and known machines and systems and has low manufacturing costs.

This aim and these and other objects, which will become better apparent hereinafter, are achieved by a stackable crate, comprising a perimetric frame that has, in a lower region and at the corners, fixed legs of limited height, **characterized in that** said perimetric frame has, in a lower region and proximate to the corners, first seats for the rotary and removable interconnection of feet of a chosen height and, in an upper region, second seats for the stacking of said legs and engagement means for the removable interconnection of at least one tray.

Further characteristics and advantages of the invention will become better apparent from the following detailed description of a preferred but not exclusive embodiment thereof, illustrated by way of non-limiting example in the accompanying drawings, wherein:

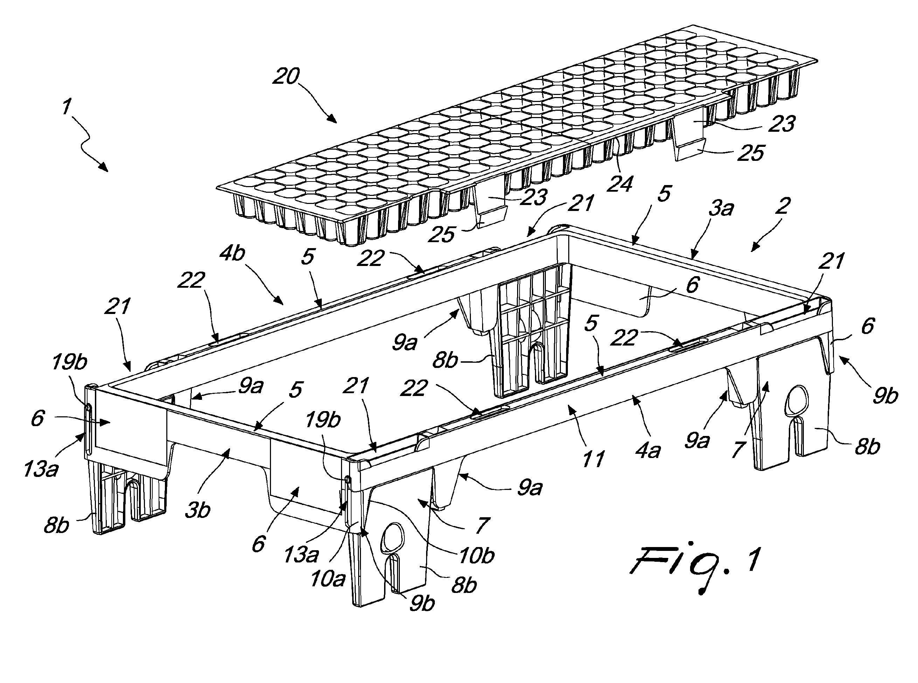

Figure 1 is an exploded perspective view of a stackable crate according to the invention;

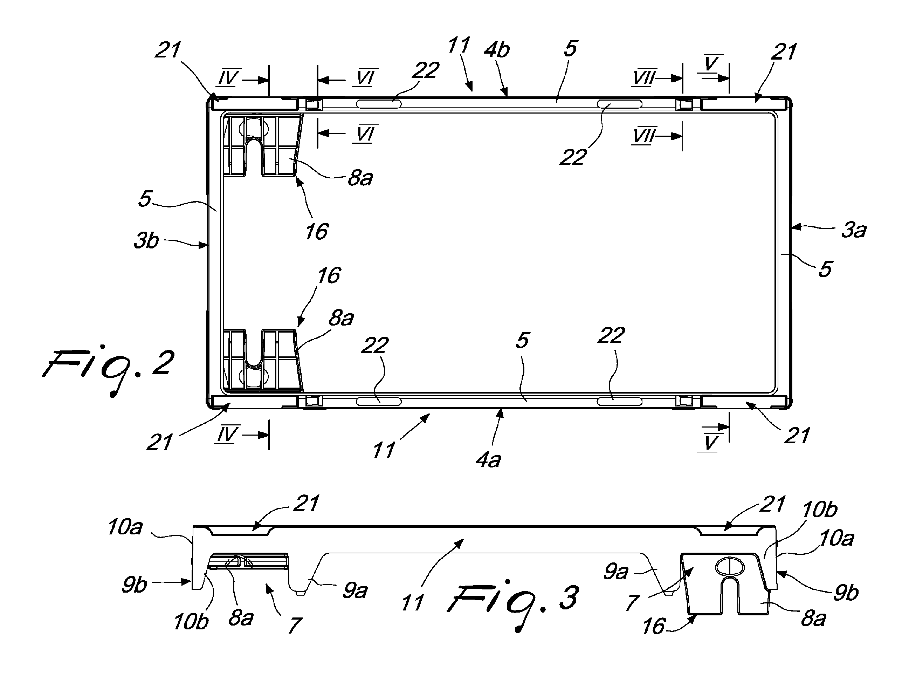

Figure 2 is a top view of the crate according to the invention, in which the two feet are folded;
Figure 3 is a side view of the crate according to the invention in the same configuration as Figure 2;

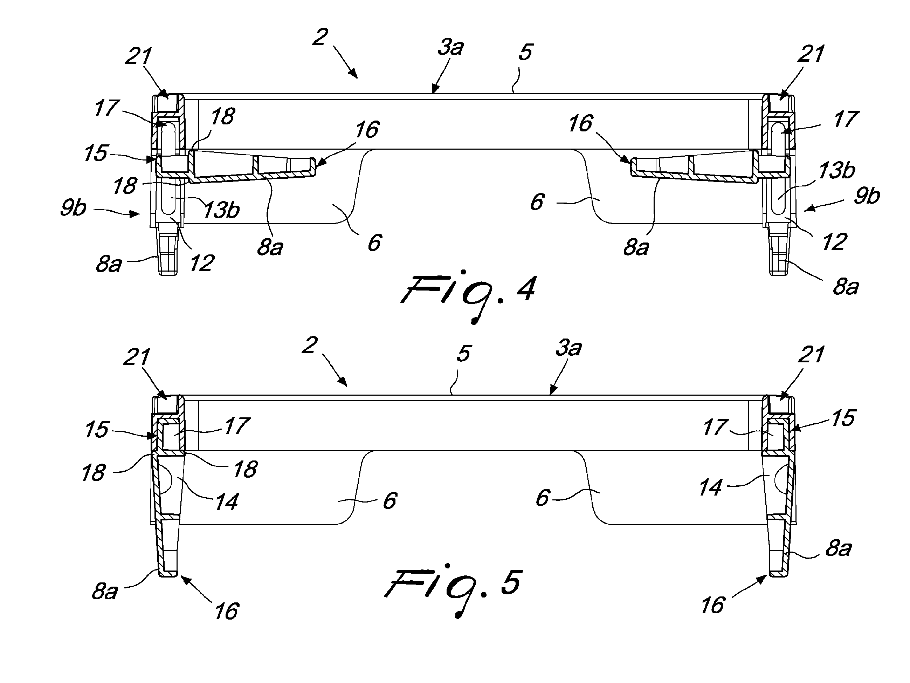

Figure 4 is a sectional view, taken along the line IV-IV of Figure 2;
Figure 5 is a sectional view, taken along the line V-V of Figure 2;

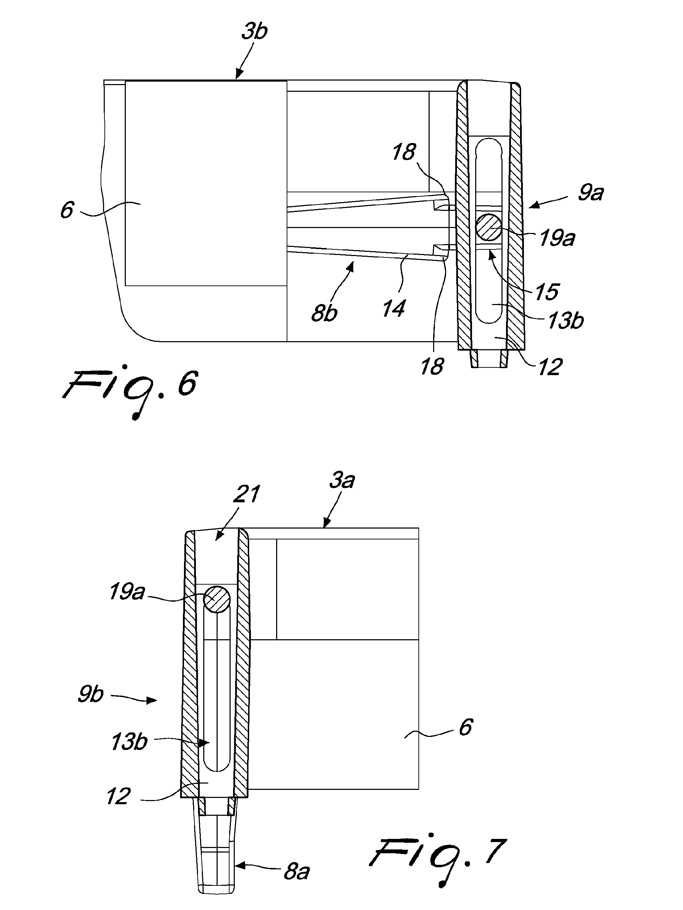

Figure 6 is a sectional view, taken along the line VI-VI of Figure 2;
Figure 7 is a sectional view, taken along the line VII-VII of Figure 3;

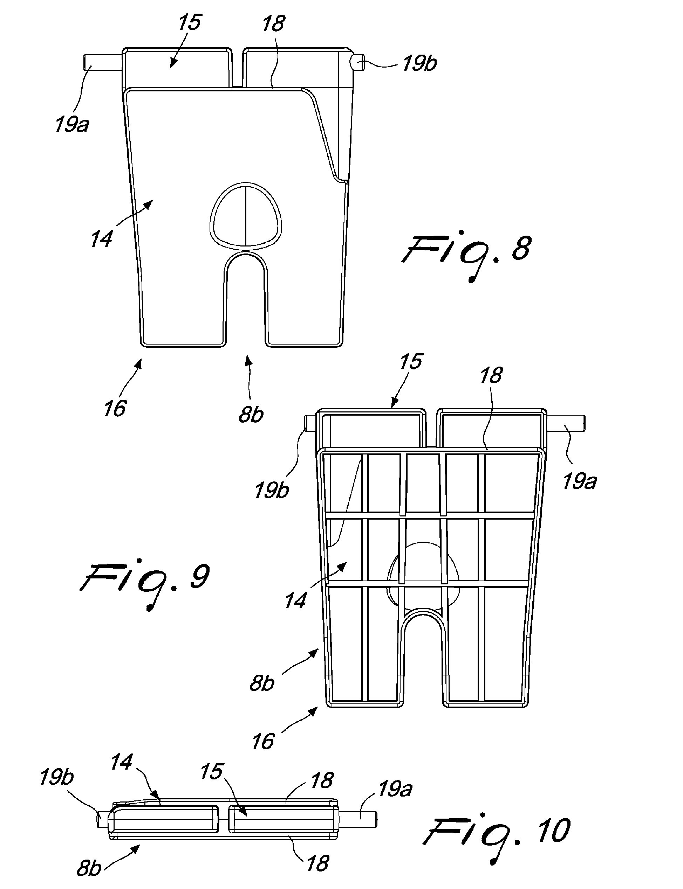

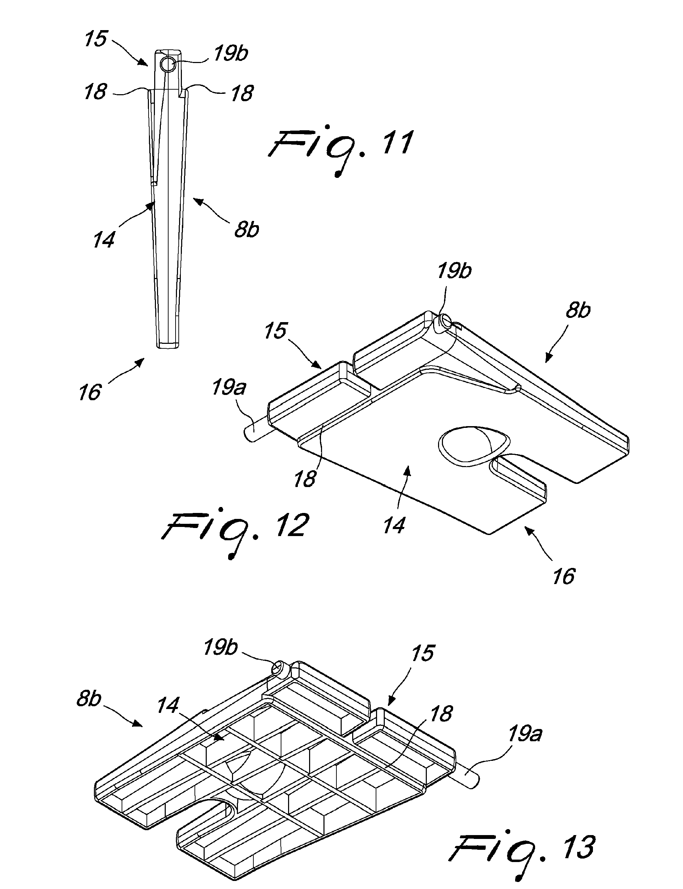

Figures 8 to 13 are front, rear, top, side, front perspective and rear perspective views of a type of foot;

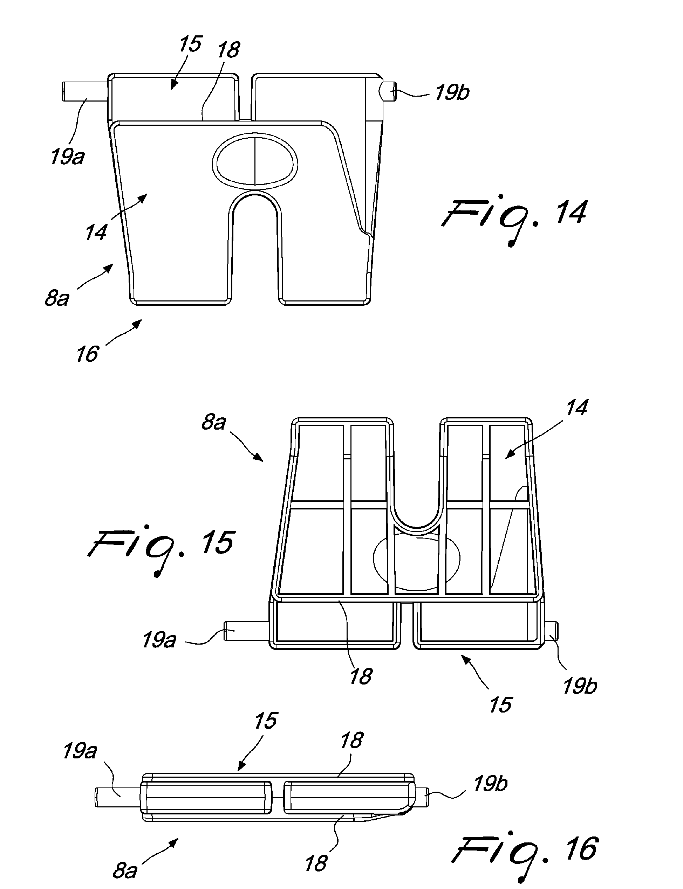

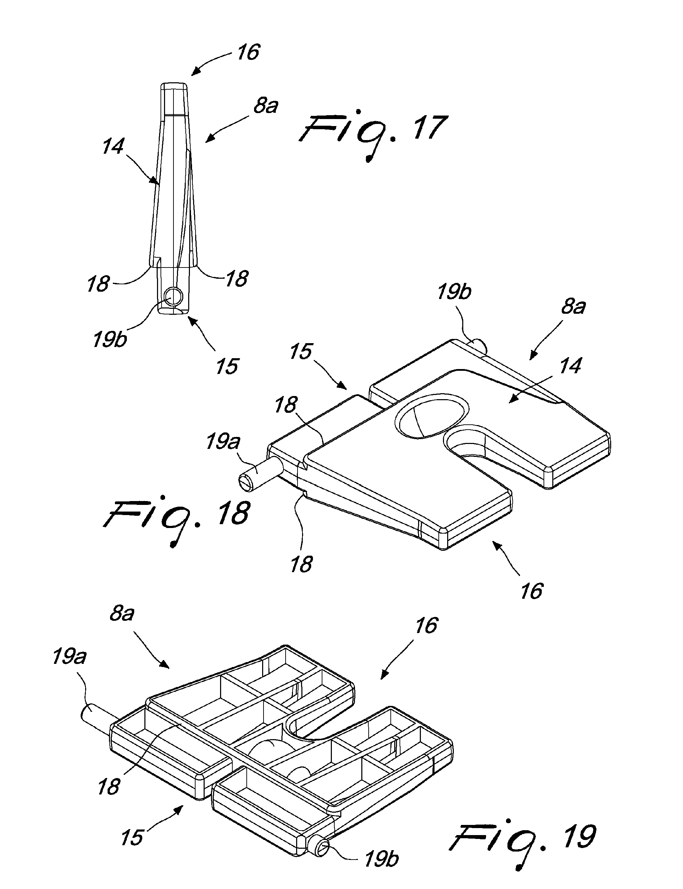

Figures 14 to 19 are views, similar to the preceding ones, of a second type of foot.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a stackable crate which comprises a perimetric frame 2, preferably made of plastics, which has a rectangular plan shape with cross-members 3a, 3b and longitudinal members 4a, 4b shaped like parallelepipeds, preferably with a rectangular plan shape, so as to form first upper surfaces 5 of a desired width.

Advantageously, the cross-members 3a, 3b and longitudinal members 4a, 4b can be appropriately provided with cutouts.

Fixed legs 6 of an equal modest height protrude below the frame 2 at the corners.

The legs 6 extend, starting from the corner, preferably in the direction of the cross-members 3a, 3b and along part of their length.

The crate 1 is also constituted by the fact that the perimetric frame 2 has, again in a lower region and proximate to the corners, first seats 7 for the rotary and removable interconnection of feet 8a, 8b of a desired height.

The seats 7 are obtained between a pair of tabs 9a, 9b that protrude below the frame 2 proximate to the corners, preferably at the longitudinal members 4a, 4b.

The tabs 9a, 9b have a height that is equal to the height of the legs 6.

In the embodiment shown, the tab 9b that is adjacent to the corner has a first wall 10a which also constitutes part of the leg 6 and, along the longitudinal member 4a, a second wall 10b, which is perpendicular to the preceding one and therefore lies on the plane of arrangement of the lateral surface 11 of the frame 2, like the first wall 10a.

The tab 9a is C-shaped in transverse cross-section, so as to form a base 12 that faces the first wall 10a of the facing tab 9b.

At the first wall 10a and at the base 12 there is a slot 13a, 13b that is extended longitudinally and affects part of the length of the first wall 10a and the base 12.

The feet 8a, 8b are substantially mutually identical and basically differ in their height, and therefore we shall describe one, assigning the same numerals for technically equivalent parts.

Each foot can be inserted slidingly, removably and rotatably between the pairs of tabs 9a, 9b; in plan view, it is preferably frustum-shaped so as to form a body 14 that has an upper end 15, which is longer but slightly shorter than the distance between the facing regions for blending the tabs 9a, 9b with the longitudinal members, and a lower end 16, which is shorter and is designed to rest on the ground or on another crate.

The upper end 15 is thinner than the body 14 and its thickness is such as to enter a complementarily shaped receptacle 17 formed in the region of the longitudinal member that blends the tabs 9a, 9b; a step 18 is in fact formed between the body 14 and the upper end 15 that abuts against the lower edges of the receptacle 17.

Each foot 8a, 8b further has a pair of pins 19a, 19b that protrude axially at the upper end 15 one pin being longer than the other; such pins are positioned removably and slidingly at the slots 13a, 13b; in particular, the longer pin 19a must be inserted in the slot 13b formed on the tab 9a.

Each foot 8a, 8b can therefore be inserted slidingly within each seat 7, being guided in its sliding by the pins 19a, 19b arranged within the slots 13a, 13b to a temporarily stable position in which the upper end 15 enters at the receptacle 17 so that the steps 18 of the body 14 abut; in this manner, the crate has feet that are higher than the legs 6 and therefore, depending on the foot of desired size, there can be a larger or smaller vertical space for the cultures that it will be stored on at least one suitable tray 20 that can be interconnected removably in an upper region with respect to the frame 2.

The pair of pins 19a, 19b constitutes a means that is adapted to further allow the rotation of each foot 8a, 8b with respect to the respective slot 13a, 13b; rotation is allowed in the direction that directs the lower end 16 toward the inside of the frame 2 so as to occupy a space that lies below the positioning space of the tray 20.

This allows, once the tray 20 has been removed and therefore in case of storage or transport of the crate, to reduce its height, and therefore the volume occupied thereby, returning it to the volume of the legs 6, and this is done even without removing the feet 8a, 8b.

The removal of such feet in fact can be allowed in order to use taller or shorter ones, simply by deforming elastically for example the first wall 10a so as to uncouple the pin 19b from the slot 13a in order to allow uncoupling.

Above the frame 2 there are, preferably at the region of the first upper surfaces 5 of the longitudinal members 4a, 4b that lie above the first seats 7, second seats 21 that are shaped complementarily with respect to the lower ends of the feet 8a, 8b and of the legs 6, the second seats 21 being designed to allow the stacking of multiple crates without the feet 8a, 8b or with them; in the first case, the volume occupied for the storage and transport steps is reduced further.

The frame 2 further has engagement means for the removable interconnection of the at least one tray 20, such means being constituted by third seats 22 that are formed preferably at the region of the first upper surfaces 5 of the longitudinal members 4a, 4b that are adjacent to the second seats 21, elastically deformable lugs 23 being arrangeable removably in such seats, preferably by snap action, and protruding below a perimetric edge 24 of the tray 20 and ending with a tooth 25.

The perimetric edge 24 has dimensions, in terms of width, such that it can be rested on the first upper surfaces 5 of the longitudinal members 4a, 4b, so as to allow the frame 2 to support the tray 20 temporarily.

It has thus been found that the invention achieves the intended aim and objects, a crate having been provided which can be stacked on other identical ones, optimizing the volumes both as a function of the heights of the products stored on the trays, and in case of transport and/or storage thereof in the absence of a tray and therefore of cultures.

Moreover, the crate allows even operators who are not particularly trained to optimize the occupied volume rapidly and easily, is structurally simple, can be manufactured with ordinary and known machines and systems, and has low manufacturing costs.

The invention is of course susceptible of numerous modifications and variations, all of which are within the scope of the appended claims.

Of course, the materials used, as well as the dimensions that constitute the individual components of the invention, may be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or may be replaced with equivalents.

The disclosures in Italian Patent Application No. TV2009A000009 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stackable crate (1), comprising a perimetric frame (2) that has, in a lower region and at the corners, fixed legs (6) of limited height, **characterized in that** said perimetric frame (2) has, in a lower region and proximate to the corners, first seats (7) for the rotary and removable interconnection of feet (8a, 8b) of a chosen height and, in an upper region, second seats (21) for the stacking of said legs (6) and engagement means for the removable interconnection of at least one tray (20).

2. The crate according to claim 1, **characterized in that** said perimetric frame (2) has a rectangular plan shape with cross-members (3a, 3b) and longitudinal members (4a, 4b) shaped like parallelepipeds to form first upper surfaces (5) of a desired width, said fixed legs (6) of identical and limited height protruding below said frame (2) at the corners, said first seats (7) being obtained between a pair of tabs (9a, 9b) that protrude below said frame (2) proximate to the corners.

3. The crate according to claims 1 and 2, **characterized in that** said tabs (9a, 9b) have a height that is equal to the height of said legs (6), said tab (9b) that is adjacent to the corner having a first wall (10a) that also constitutes part of said leg (6) and, along said longitudinal member (4a), a second wall (10b), which is perpendicular to the preceding one and lies on the plane of arrangement of the lateral surface (11) of said frame (2), like said first wall (10a), said tab (9a) having a C-shaped transverse cross-section so as to form a base (12) that faces said first wall (10a) of said facing tab (9b).

4. The crate according to claims 1 and 3, **characterized in that** a slot (13a, 13b) is formed both at said first wall (10a) and at said base (12), is extended longitudinally and affects part of the length of said first wall (10a) and said base (12).

5. The crate according to claims 1 and 4, **characterized in that** each one of said feet (8a, 8b) can be inserted removably, slidingly and rotatably between said pairs of tabs (9a, 9b) and has a preferably frustum-like plan shape so as to form a body (14) that has an upper end (15) that is longer but slightly shorter than the distance between the facing regions for blending said tabs (9a, 9b) to said longitudinal members (4a, 4b), and a lower end (16) that is narrower and is designed to rest on the ground or on second seats (21) formed in an upper region with respect to said frame (2).

6. The crate according to claims 1 and 5, **characterized in that** said upper end (15) has a thickness that is lower than the thickness of said body (14) and such as to enter removably at a complementarily shaped receptacle (17) that is formed in the region of said longitudinal member that blends said tabs (9a, 9b), between said body (14) and said upper end (15) there being a step (18) that abuts against the lower edges of said receptacle (17).

7. The crate according to claims 1 and 6, **characterized in that** each one of said feet (8a, 8b) has a pair of pins (19a, 19b), which protrude axially with respect to said upper end (15), one pin being longer than the other, said pins being arranged removably and slidingly at said slots (13a, 13b), the pin (19a) being longer and insertable at said slot (13b) formed on said tab (9a), the removal of said feet (8a, 8b) being allowed by deforming elastically said first wall (10a) so as to uncouple said pin (19b) from said slot (13a).

8. The crate according to claims 1 and 7, **characterized in that** each one of said feet (8a, 8b) can be inserted slidingly within each one of said seats (7), being guided in its sliding by said pins (19a, 19b) arranged within said slots (13a, 13b) to a temporarily stable position in which said upper end (15) is inserted at said receptacle (17) so that said steps (18) of said body (14) abut against it, said pair of pins (19a, 19b) constituting a means that is adapted to allow the rotation of each one of said feet (8a, 8b) with respect to the respective slot (13a, 13b), rotation being allowed in the direction that directs said lower end (16) toward the inside of said frame (2) to occupy a space that lies below the positioning space of said tray (20).

9. The crate according to claims 1 and 8, **characterized in that** second seats (21) are formed above said frame (2), preferably at the region of said first upper surfaces (5) of said longitudinal members (4a, 4b) that lie above said first seats (7) and are shaped complementarily with respect to the lower ends (16) both of said feet (8a, 8b) and of said legs (6), said second seats (21) being adapted to allow the stacking of multiple trays with or without said feet (8a, 8b).

10. The crate according to one or more of the preceding claims, **characterized in that** said frame (2) has engagement means for the removable interconnection of said at least one tray (20), said means being constituted by third seats (22) formed preferably at the region of said first upper surfaces (5) of said longitudinal members (4a, 4b) that are adjacent to said second seats (21), elastically deformable lugs (23) being detachably arrangeable, preferably by snap action, within said second seats (21), protruding below the perimetric edge (24) of said tray (20) and ending with a tooth (25), said perimetric edge (24) having such dimensions, in terms of width, that it can be rested on said first upper surfaces (5) of said longitudinal members (4a, 4b), so as to allow the frame (2) to support said tray (20) temporarily.

## Amended claims

### Amended claims in accordance with Rule 137(2) EPC.

**1.** A stackable crate (1), comprising a perimetric frame (2) that has, in a lower region and at the corners, fixed legs (6) of limited height, and, in an upper region, upper seats (21) for the stacking of said legs (6) and engagement means for the removable interconnection of at least one tray (20), **characterized in that** said perimetric frame (2) has, in a lower region and proximate to the corners, lower seats (7) for the rotary and removable interconnection of feet (8a, 8b) of a chosen height.

**2.** The crate according to claim 1, **characterized in that** said perimetric frame (2) has a rectangular plan shape with cross-members (3a, 3b) and longitudinal members (4a, 4b) shaped like parallelepipeds to form first upper surfaces (5) of a desired width, said fixed legs (6) of identical and limited height protruding below said frame (2) at the corners, said lower seats (7) being obtained between a pair of tabs (9a, 9b) that protrude below said frame (2) proximate to the corners.

**3.** The crate according to claims 1 and 2, **characterized in that** said tabs (9a, 9b) have a height that is equal to the height of said legs (6), said tab (9b) that is adjacent to the corner having a first wall (10a) that also constitutes part of said leg (6) and, along said longitudinal member (4a), a second wall (10b), which is perpendicular to the preceding one and lies on the plane of arrangement of the lateral surface (11) of said frame (2), like said first wall (10a), said tab (9a) having a C-shaped transverse cross-section so as to form a base (12) that faces said first wall (10a) of said facing tab (9b).

**4.** The crate according to claims 1 and 3, **characterized in that** a slot (13a, 13b) is formed both at said first wall (10a) and at said base (12), is extended longitudinally and affects part of the length of said first wall (10a) and said base (12).

**5.** The crate according to claims 1 and 4, **characterized in that** each one of said feet (8a, 8b) can be inserted removably, slidingly and rotatably between said pairs of tabs (9a, 9b) and has a preferably frustum-like plan shape so as to form a body (14) that has an upper end (15) that is longer but slightly shorter than the distance between the facing regions for blending said tabs (9a, 9b) to said longitudinal members (4a, 4b), and a lower end (16) that is narrower and is designed to rest on the ground or on the upper seats (21) formed in an upper region with respect to said frame (2).

**6.** The crate according to claims 1 and 5, **characterized in that** said upper end (15) has a thickness that is lower than the thickness of said body (14) and such as to enter removably at a complementarily shaped receptacle (17) that is formed in the region of said longitudinal member that blends said tabs (9a, 9b), between said body (14) and said upper end (15) there being a step (18) that abuts against the lower edges of said receptacle (17).

**7.** The crate according to claims 1 and 6, **characterized in that** each one of said feet (8a, 8b) has a pair of pins (19a, 19b), which protrude axially with respect to said upper end (15), one pin being longer than the other, said pins being arranged removably and slidingly at said slots (13a, 13b), the pin (19a) being longer and insertable at said slot (13b) formed on said tab (9a), the removal of said feet (8a, 8b) being allowed by deforming elastically said first wall (10a) so as to uncouple said pin (19b) from said slot (13a).

**8.** The crate according to claims 1 and 7, **characterized in that** each one of said feet (8a, 8b) can be inserted slidingly within each one of said seats (7), being guided in its sliding by said pins (19a, 19b) arranged within said slots (13a, 13b) to a temporarily stable position in which said upper end (15) is inserted at said receptacle (17) so that said steps (18) of said body (14) abut against it, said pair of pins (19a, 19b) constituting a means that is adapted to allow the rotation of each one of said feet (8a, 8b) with respect to the respective slot (13a, 13b), rotation being allowed in the direction that directs said lower end (16) toward the inside of said frame (2) to occupy a space that lies below the positioning space of said tray (20).

**9.** The crate according to claims 1 and 8, **characterized in that** said upper seats (21) are formed above said frame (2), preferably at the region of said first upper surfaces (5) of said longitudinal members (4a, 4b) that lie above said lower seats (7) and are shaped complementarily with respect to the lower ends (16) both of said feet (8a, 8b) and of said legs (6), said upper seats (21) being adapted to allow the stacking of multiple trays with or without said feet (8a, 8b).

**10.** The crate according to one or more of the preceding claims, **characterized in that** said frame (2) has engagement means for the removable interconnection of said at least one tray (20), said means being constituted by third seats (22) formed preferably at the region of said first upper surfaces (5) of said longitudinal members (4a, 4b) that are adjacent to said upper seats (21), elastically deformable lugs (23) being detachably arrangeable, preferably by snap action, within said upper seats (21), protruding below the perimetric edge (24) of said tray (20) and ending with a tooth (25), said perimetric edge (24) having such dimensions, in terms of width, that it can be rested on said first upper surfaces (5) of said longitudinal members (4a, 4b), so as to allow the frame (2) to support said tray (20) temporarily.
